# EUROPEAN PATENT APPLICATION

(11) **EP 3 510 905 A1**
(43) Date of publication of application: **17.07.2019**
(21) Application number: 19151049.4
(22) Date of filing: 09.01.2019
(51) Int. Cl.: A47J 43/07, A47J 43/08, H05B 6/12

(54) **HEATING ASSEMBLY**

(30) Priority: 16.01.2018 GB 201800699; 02.05.2018 LU 100785
(71) Applicant: Kenwood Limited, Havant, Hampshire PO9 2NH (GB)
(72) Inventor: FIELDS, Rob, Havant, Hampshire P09 2NH (GB)
(74) Representative: Hector, Annabel Mary

(57) **Abstract**

A heating assembly for a kitchen appliance such as a blender, for passively heating food, comprising a heating member for generating heat by means of relative motion. The heating member is arranged adjacent a component of the kitchen appliance with which there is relative motion so as to generate heat, and means are provided for adjusting the heating member so as to adjust the heat generated.

## Description

The present invention relates to a heating assembly for use within a kitchen appliance for food, in particular the heating assembly comprises passive means for heating.

There is a demand by consumers for blenders and food processors that can heat food as they process it. This heating is often achieved through the integration of "active heating" in the form of separate resistive or induction-based heating systems; these systems can be effective but require additional power and componentry to make them work, all adding cost to the product.

To add a heating function to existing products via a new unit with active heating requires an additional power lead to be plugged in; this is not ideal for a user where there may be limited power sockets available and creates an issue with multiple leads on the worktop creating a hazard.

A solution to one or more of the above problems is desired.

According to one aspect of the present invention there is provided a heating assembly for a kitchen appliance for food, comprising: a heating member for generating heat by means of relative motion; a formation for arranging the heating member adjacent a component of the kitchen appliance with which there is relative motion so as to generate heat; and means for adjusting the heating member so as to adjust the heat generated. In this way, food contained within the kitchen appliance may be heated.

Preferably, the means for adjusting is arranged to allow adjustment of the heating member so as not to generate any heat.

Preferably, the means for adjusting is any combination of one or more of: an actuator for adjusting a contact force between the heating member and the component; an actuator for adjusting the orientation of the heating member and/or the angle between the heating member and the component; an actuator for adjusting the magnitude of relative motion between the heating member and the component; an actuator for adjusting a distance between the heating member and the component; means for urging the heating member towards the component, and more preferably the means for urging is a spring.

Preferably, the means for adjusting is adapted: to force the heating member in a direction substantially parallel to an axis of rotation of a tool drive shaft of the kitchen appliance and/or to force the heating member in a direction substantially perpendicular to an axis of rotation of a tool drive shaft of the kitchen appliance. Preferably, the heating assembly further comprises a temperature sensor, and optionally in the form of a bimetallic strip or a thermistor.

Preferably, the heating assembly further comprises a thermostat for controlling the means for adjusting the heating member.

Preferably, the heating assembly further comprises a user input for receiving a desired temperature to be generated by the heating member. Preferably, the user input is configured directly to adjust the means for adjusting. Preferably, the desired temperature is a desired temperature range.

Preferably, the thermostat is arranged so as to measure the temperature of the heating member and/or the temperature within a container of the kitchen appliance within which food is to be processed.

Preferably, the component is part of, or coupled to, a drive mechanism of the kitchen appliance, and more preferably the tool or drive shaft of the kitchen appliance. Preferably, the heating member is arranged adjacent a portion of a drive shaft of the kitchen appliance. Preferably, the portion is at least 10%, more preferably the portion is at least 25%, and still more preferably the portion is at least 50%, of the height of the drive shaft.

Preferably, the component extends away from an axis of rotation of a drive shaft of the kitchen appliance, and more preferably extends substantially perpendicularly to the axis of rotation.

Preferably, the component is a disc, and more preferably the heating member is arranged to face a major surface of the disc when generating heat.

Preferably, the heating assembly further comprises means for fixing the heating member to a moving part of the kitchen appliance. Preferably, the heating member is static when generating heat.

According to another aspect of the present invention, there is provided a heating assembly for a kitchen appliance for food, comprising: a heating member for generating heat by means of relative motion; means for fixing the heating member to a moving part of the kitchen appliance; and a formation for arranging the heating member adjacent a component of the kitchen appliance with which there is relative motion so as to generate heat.

Preferably, the heating apparatus further comprises means for adjusting the heating member so as to adjust the heat generated.

Preferably, the heating member is a passive heating member, and more preferably only a passive heating member.

Preferably, the heating assembly comprises at least two heating members. Preferably a pair of heating members is arranged opposite one another. Preferably, the heating members are adjustable so as to clamp a moving part of the kitchen appliance.

Preferably, the heating member is adapted to generate heat when in contact with the component, and more preferably by means of friction.

Preferably, the heating member is adapted to generate heat when separated from the component, and more preferably by means of electromagnetism, and still more preferably by means of electromagnetic induction.

Preferably, the heating member conforms with the shape of the component, and more optionally the heating member is flat or curved.

Preferably, the heating member is also a brake for a tool drive shaft of the kitchen appliance, where such a brake may be used to slow, stop, or prevent movement of the drive shaft.

Preferably, the heating assembly further comprises thermal insulation, the thermal insulation being arranged to insulate a motor, electronics, and/or an external surface of the kitchen appliance. Preferably, the thermal insulation has a thermal conductivity of less than 1 Wm⁻¹K⁻¹, more preferably less than 0.1 Wm⁻¹K⁻¹, and still more preferably less than 0.05 Wm⁻¹K⁻¹.

Preferably, the heating assembly further comprises means for cooling, and more preferably in the form of a thermal conductor or a means for active cooling. Preferably, the means for cooling is a thermal conductor having a thermal conductivity of at least 10 Wm⁻¹K⁻¹, more preferably at least 100 Wm⁻¹K⁻¹, and still more preferably at least 400 Wm⁻¹K⁻¹.

Preferably, the means for cooling is arranged to convey heat away from a heating member, motor, electronics, and/or an external surface of the kitchen appliance. Preferably, the thermal conductor comprises a tool drive shaft of the kitchen appliance.

Preferably, the component is an internal surface of the kitchen appliance. Preferably, the component is substantially shaped as an annulus.

According to another aspect of the invention, there is provided an attachment for a kitchen appliance comprising a heating assembly as aforesaid.

Preferably, the attachment comprises a driveable tool for the kitchen appliance.

Preferably, the attachment comprises means for picking up drive from the kitchen appliance.

Preferably, the attachment comprises a container for processing food.

Preferably, the attachment comprises means for coupling the attachment to a container for processing food. Preferably, the means for coupling is a clip.

According to another aspect of the invention, there is provided a kitchen appliance for food comprising an attachment for a kitchen appliance as aforesaid.

According to another aspect of the invention, there is provided a kitchen appliance for food comprising a heating assembly as aforesaid.

As used herein, the term 'moving parts' may refer to any component of an appliance shaft which may move during operation of this appliance, for example a drive shaft, gears, and/or a motor.

As used herein, the term 'adjustable' may refer to any component wherein the position (in any degree of freedom), or the properties, of this component may be altered either absolutely, or relative to any other component.

As used herein, the term 'passive' may refer to any member which is not itself using a power source. A passive heating member may be connected to a power source but preferably without utilising the power source directly for heat generation.

The invention described here may be used in any kitchen appliance and/or as a stand-alone device. This includes any domestic food-processing and/or preparation machine, including both top-driven machines (e.g., stand-mixers) and bottom-driven machines (e.g., food processors). It may be implemented in heated and/or cooled machines. The invention may also be implemented in both handheld (e.g., hand blenders) and table-top (e.g., blenders) machines. It may be used in a machine that is built-in to a work-top or work surface, or in a stand-alone device. The invention can also be provided as a stand-alone device, whether motor-driven or manually powered.

Whilst the invention has been described in the field of domestic food processing and preparation machines, it can also be implemented in any field of use where efficient, effective and convenient preparation and/or processing of material is desired, either on an industrial scale and/or in small amounts. The field of use includes the preparation and/or processing of: chemicals; pharmaceuticals; paints; building materials; clothing materials; agricultural and/or veterinary feeds and/or treatments, including fertilisers, grain and other agricultural and/or veterinary products; oils; fuels; dyes; cosmetics; plastics; tars; finishes; waxes; varnishes; beverages; medical and/or biological research materials; solders; alloys; effluent; and/or other substances.

The invention extends to methods and/or apparatus substantially as herein described and/or as illustrated with reference to the accompanying drawings.

The invention extends to any novel aspects or features described and/or illustrated herein. In addition, apparatus aspects may be applied to method aspects, and vice versa. Furthermore, any, some and/or all features in one aspect can be applied to any, some and/or all features in any other aspect, in any appropriate combination.

It should also be appreciated that particular combinations of the various features described and defined in any aspects of the invention can be implemented and/or supplied and/or used independently.

As used herein, means plus function features may be expressed alternatively in terms of their corresponding structure, such as a suitably programmed processor and associated memory, for example.

Aspects and embodiments of the invention are set out in the appended claims. These and other aspects and embodiments of the invention are also described herein.

At least one embodiment of the invention will now be described, by way of example only, with reference to the accompanying drawings, in which:
Figures 1 and 2 show examples of heating assemblies incorporated into a food processor; and
Figure 3 shows an example of a heating assembly incorporated into a hand blender.

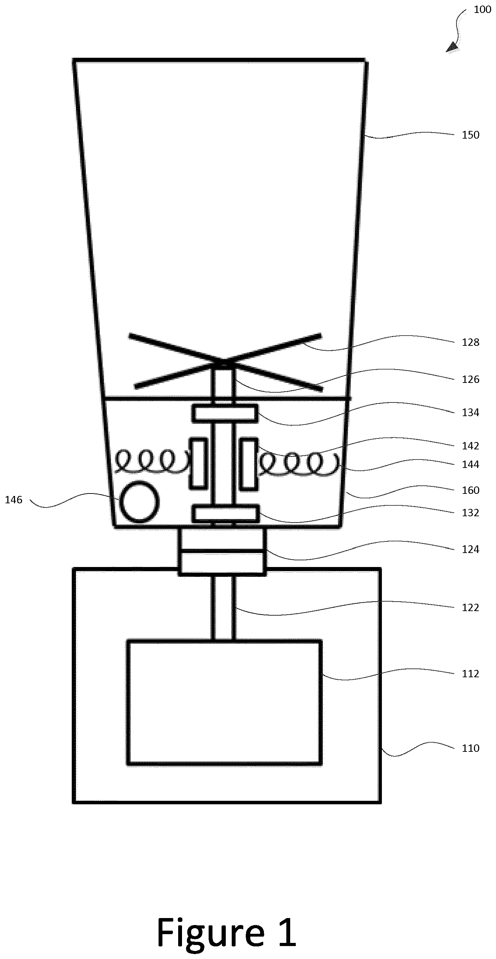

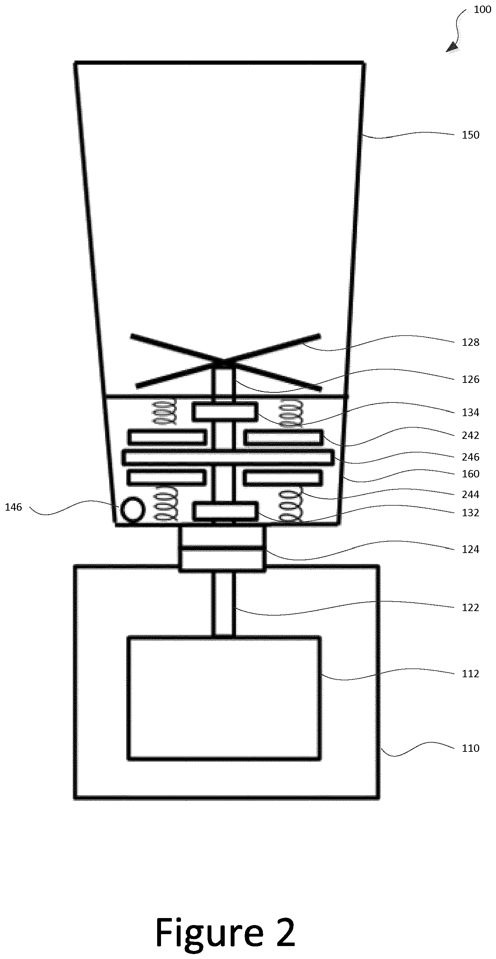

As shown in Figures 1 and 2, a kitchen appliance 100 is provided in the form of a blender comprising a base 110, which comprises a motor 112, and a removable container 150. The motor is arranged to drive a tool 128 provided within the container 150.

The motor is connected to a drivable motor shaft 122, which connects to the proximal end of a tool drive shaft 126 for the tool (in the form of a drivable blade tool having blades 128) via a drive coupling 124. The tool drive shaft is connected to the removable container via bearings 132, 134.

The motor 112 is used to drive the motor shaft 122, which, via the drive coupling 124, drives the tool drive shaft 126 and rotates the blades 128.

Heating members 142 are contained within a housing assembly 160 and are arranged adjacent to the tool drive shaft 126. Using adjustment members 144, the heating members 142 can be moved relative to the tool drive shaft 126. In particular, the heating members 142 are movable in and out of contact with the tool drive shaft 126, thereby to generate heat or not to generate heat respectively. Furthermore, the heating members 142 are movable so as to adjust the force with which the heating members 142 contact the tool drive shaft 126, thereby to allow adjustment of the amount of heat generated.

In more detail, when the heating members 142 are in contact with the rotating tool drive shaft 126, friction between the tool drive shaft 126 and the heating members 142 generates heat; this heat is conducted along the tool drive shaft 126 into the blades 128 and therefore to the contents of the container 150.

The adjustment members 144 are controlled via a control mechanism 146, such that the position of the heating members 142 is adjustable, as well as the force with which the heating members 142 compress against the tool drive shaft 126.

Such adjustment enables control of the friction between the heating members 142 and the tool drive shaft 126 and the resultant heat generated.

For example, the adjustment members 144 can be adjusted such that the friction between the heating members 142 and the tool drive shaft 126 is increased, such that this friction acts as a brake to allow slowing of the blades 128 or to prevent movement of the blades 128; this makes cleaning easier and safer as the blades cannot rotate when a user is cleaning inside the container 150.

The control mechanism 146 for selecting the degree of friction based heating may be a switch or dial on the removable container 150, a mechanical link from the base unit 110, a digital link and actuator to the base unit or any other device via WiFi or Bluetooth. An interface is provided in combination with the control mechanism 146 that displays to a user the level at which the control mechanism is set and/or settings / properties of the control mechanism, such as the current temperature. The interface also enables the user to select a target temperature, or target temperature range.

The control mechanism 146 alters the adjustment members 144 to achieve, for example, the target temperature. This alteration may use a mechanical link, where a control mechanism knob being rotated directly causes a change in the position of an adjustment member, a hydraulic link, or an electronic link. The control mechanism may be configured to receive an electronic signal via a user interface, which moves the adjustment members 144 via an actuator.

Where the adjustment members 144 comprises a spring, a control mechanism 146 preferably comprises either a rotatable knob, or a slideable member located in a slot. The heating members 142 may be directly connected to one end of a spring (adjustment members 144). Sliding the slideable member radially inwards is arranged by mechanical link to compress this spring (typically from the other end), which increases the force placed upon the heating members 142 and the force between the heating members 142 and the tool drive shaft 126, thereby increasing the heat generated. The simplicity of this mechanism would allow easy replacement, or re-calibration, which may be needed as the spring ages and undergoes, for example, work hardening.

In some embodiments, a control mechanism 146 comprising an electronic actuator is used as this is more easily operated from afar. The user is able to set a temperature using a data connection, such as a 4G connection, an electronic actuator may then adjust the position of the adjustment members 144. This may be desirable if the heating mechanism is used as a sous-vide - where a food processor may remain on while a user is not in the vicinity of this food processor.

Advantageously, the control mechanism 146, may control only the adjustment members 144, and the heating members 142, but not (for example) the drive speed. The heating produced may then be adjusted without, or with only slightly, affecting the operation of the food processor.

The heating members 142 comprise, for example, a frictional material such as those used in (vehicular) clutch and brake systems; the heating members therefore comprise metal, plastic, leather, ceramic, wood and/or a composite material.

The control mechanism 146 comprises a sensor (not shown) for sensing the temperature of food within the container 150. The sensor is utilised in a feedback mechanism as part of the control mechanism 146 to sense the temperature and adjust the adjustment members 144 so as to generate heat (within an acceptable level of tolerance) that achieves a desired temperature.

For example, the sensor is in the form of a bimetallic strip or other temperature measuring device, such as a circuit containing a thermistor, where such a device may respond to temperature to automatically control the friction and therefore temperature against a user selected temperature range or value.

Where a bimetallic strip is provided, the strip deforms in proportion to the temperature of the strip (where this temperature depends on the heat generated); this strip is connected to the heating members 142 so that as the temperature of the strip increases the force placed upon the heating members 144, and therefore the heat generated, is reduced.

As shown in the figures, the adjustment members 144 are in the form of a spring for urging the heating members 142 against the tool drive shaft. More generally, the adjustment members 144 operate using, for example: a spring, gravity, rubber, sliding fit, or a taper fit mechanism for adjusting the position of the heating members 142 and the compressive force of the heating members 142 about the tool drive shaft 126.

The heating members 142 are arranged and/or shaped to generate friction as the blade shaft 126 is turned in any direction (*i.e.* clockwise or anticlockwise).

The heating member is flat or curved (for example, so as to conform to the tool drive shaft). So as to increase the heat generation, the heating member is shaped and dimensioned to contact a large surface area of the tool drive shaft 126.

The surface area of the blades 128 may be increased to give greater heat transfer from the blades 128 to the contents of the removable container 150.

The heating members 142 are coupled to the housing assembly 160 and therefore transmit heat into the base of the container 150, as well as via the blades 128. The housing assembly 160 is designed to transfer heat from the heating members 142 to the container 150 by using high heat transfer rate metals and by providing short heat transfer distances (e.g. between the heating members 142 and the container 150).

The housing assembly 160 comprises thermal insulation to reduce the heat transferred to the external surface of the kitchen appliance 100 (for user safety). There is also provided thermal insulation to reduce the heat transferred to the motor 312, for example in the form of: a non-conductive material forming the drive coupling 324; using a non-contact coupling method, such as a magnetic drive coupling; or arranging a heat sink on or near the motor.

Where a thermally insulating material is used, a material with a thermal conductivity of less than 1 Wm⁻¹K⁻¹ is provided. A material with a thermal conductivity of less than 0.1 Wm⁻¹K⁻¹ is better suited, and still better is a material with a thermal conductivity of less than 0.05Wm⁻¹K⁻¹. A suitable material is, for example, polyurethane foam. If there is a risk of the insulation material contacting food, then a food safe material is used.

In addition (or as an alternative to using thermal insulation), an active cooling system is provided, such as a heat pump or a fan. Airflows can be redirected so that the air moved by, for example, a tool acts to cool a component.

The drive coupling 324 is detachable, in which case a compression coupling or interlocking coupling members is used to ensure a secure join.

In Figure 1, the heating members 142 are arranged to contact the tool drive shaft 126 directly, and are adjustable in a direction perpendicular to the axis of rotation of the tool drive shaft 126.

Figure 2 shows a heating mechanism 160 mounted on a blender, where the blender comprises a rotating friction disk (also referred to as "an elongate frictional member") 246 that is connected to the tool drive shaft.

The blender 100 shown in Figure 2 operates substantially as described with reference to Figure 1. In the example of Figure 2 an elongate frictional member 246 is connected to the blade shaft 126 and used to generate heat. Adjustment members 244 are used to cause contact between the heating members 242 and the frictional member 246. This arrangement increases the contact surface between the two friction surfaces, resulting in greater heat generation.

Heat regulation and the mechanism by which the adjustment members 244 are adjusted in the example of Figure 2 are substantially as described with reference to Figure 1.

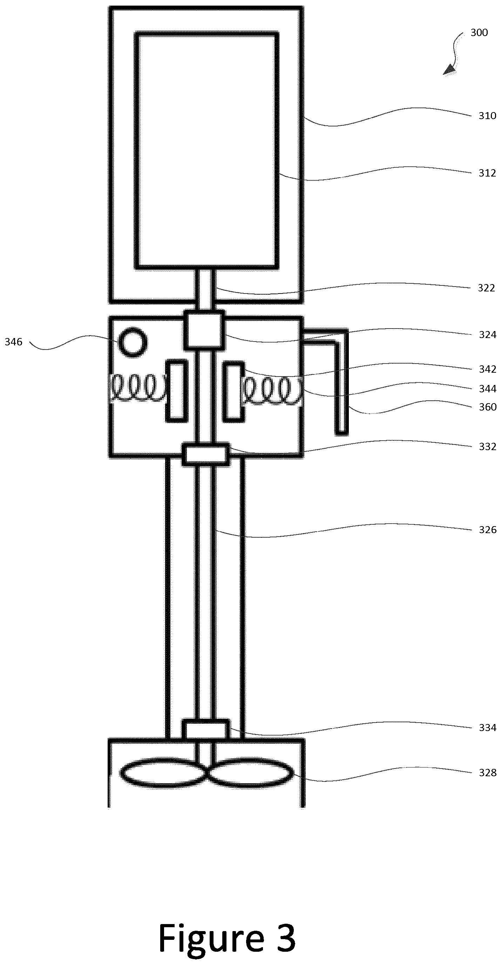

Figure 3 shows a heating mechanism incorporated into a hand blender 300.

The hand blender 300 comprises a motor housing 310, which comprises a motor 312, and a drivable motor shaft 322. A removable attachment comprising: a drivable tool shaft 326, a drive coupling 324, a tool 328, bearings 332, 334, heating members 342, and adjustment members 344 are provided for coupling to the motor housing so as to drive a tool of the removable attachment.

The removable attachment couples to the motor housing by means of a drive engagement 324 so as to pick up drive from the motor (via the drivable motor shaft 322). In turn, the drive engagement 324 drives the tool drive shaft 326 via a further drive engagement 332.

The hand blender 300 further comprises means for engaging a container within which to process food. The means for engaging a container is shown in the form of a clip 360, which can be used to attach the blender to, for example, a mixing bowl, so as to heat contents within the bowl.

It will be understood that the present invention has been described above purely by way of example, and modifications of detail can be made within the scope of the invention.

While the heating in the detailed description has primarily used a purely mechanical frictional means, such heating may use any passive heating means (where no power source is required). For example: a magnetic means may be used, where relative motion between two magnetisable materials induces eddy currents within these materials, which generates heat; or a chemical means may be used, where an exothermic reaction occurs upon (at least) two (solid and/or liquid) materials being brought into contact. Such a means may not require contact between the heating member and the shaft, which may reduce the wear on the shaft. In general, any means which is able to generate heat without using an additional power supply may be used.

While the heating in the detailed description considered relative motion between the heating members and the blade shaft, the generation of heat may be achieved by relative motion between the heating member and any component, whether this component is part of the food processor or the heating assembly. A heating component which is part of the heating assembly would be moved by a component of the food processor, for example a heating component may be placed such that it is moved by the drive shaft, or by the blades of a tool.

### Alternatives and modifications

Other methods of controlling the heat generated by adjusting the heating members means are also possible, for example:
- altering the orientation of the heating members 142, so that a different coefficient of friction is achieved - this may be achieved by connecting the heating members 142 to a control knob 146, where rotation of the knob rotates the heating members 142. Materials are well known which have differing coefficients of friction in different axes - this may, for example, be achieved using a heating member comprising "wheels", which are configured to rotate in a certain orientation, leading to a reduced speed differential, and a reduced friction when the heating members 142 are placed into this orientation.
- altering the surface area of the heating members 142 which contacts the tool drive shaft 126 - a sliding mechanism may be used which can be pulled away from, or pushed towards, the tool drive shaft 126, which retracts or advances protrusions, such as small bumps, within the heating members 142.
- altering the force placed upon the heating members 142 by the adjustment members 144 - this may involve moving the position of one end of a spring with a sliding pin mechanism to increase or decrease the force between the heating members 142 and the tool drive shaft 126.
- altering the magnitude of relative motion between the heating members 142 and the tool drive shaft 126, for example by arranging the heating member such that the blade shaft may cause the heating members 142 to rotate at a speed which is a portion of the speed of the tool drive shaft 126.
   o the speed of this rotation may be limited, for example, to a maximum speed or a minimum heat generation.
- this mechanism may involve a heating member 142 which comprises a restrained bearing with a rough inner surface placed around the shaft. Friction is generated by relative motion with the shaft, where a degree of slip may occur once a certain friction is exceeded: this limiting friction is determined by the force placed upon the restraint: this may be determined by a user, where, for example, a control knob 146 is rotatable to vary the distance between clamping surfaces placed around the bearing.
- altering the material properties of the heating members 142, for example altering the heating members 142 such that the coefficient of friction between these members and the tool drive shaft 126 is increased. This may comprise, for example: heating a friction member, which may enable some deformation. The heat may be that heat caused from friction, where a user may rotate a knob 146 to control a heat transfer mechanism - such as a conducting rod which can be placed in contact with a heat sink to reduce the heating of the heating members 142.

In one example, the heating members 142 are fixed to a moving part of the kitchen appliance 100 (such as the tool drive shaft 126) and generate heat via relative motion with a static portion of the kitchen appliance 100 (such as an internal surface of the kitchen appliance 100.

In a further example, the heating members 142 generate heat via electromagnetic induction.

Alternatively, the heating members 142 are arranged and/or shaped to generate friction against the tool drive shaft 126 only when the tool drive shaft 126 turns in one direction (*e.g.* heat is only produced when the tool drive shaft 126 rotates in a clockwise direction). This allows heating control by changing the direction of the motor, which may be advantageous where there is already digital or remote control for the motor as programs can be implemented easily. This may be implemented using a ratchet arrangement, where the heating members 142 comprise wheels which only rotate in one direction: in this direction the friction is substantially reduced. Such an arrangement may be used so that rotation in one direction results in reduced, or negligible, heating.

Any feature described as using a control mechanism 146, such as a sliding pin, could equally use a hydraulic, pneumatic, electronic, or other means of moving a member, where the control mechanism 146 may then comprise a mobile phone application which controls an actuator, or a button, which controls a flow of gas.

A hydraulic or pneumatic control means may use an external pressurised liquid or gas supply, which is released to move the adjustment member 144 and/or to increase the force placed upon the heating members 142. Such a means may allow greater forces to be placed upon an adjustment member 144 than would be possible by a person driven mechanical means. This may have use for industrial machines, and/or those where a large heat generation is required. An electronic means, or a mechanical means using leverage (such as a pin which may be pulled out to increase a lever arm distance) may also be used to increase the force which is placed upon an adjustment member 144.

Each feature disclosed in the description, and (where appropriate) the claims and drawings may be provided independently or in any appropriate combination.

Reference numerals appearing in the claims are by way of illustration only and shall have no limiting effect on the scope of the claims.

## Claims

1. A heating assembly for a kitchen appliance for food, comprising:
a heating member for generating heat by means of relative motion;
a formation for arranging the heating member adjacent a component of the kitchen appliance with which there is relative motion so as to generate heat; and means for adjusting the heating member so as to adjust the heat generated.

2. A heating assembly according to Claim 1, wherein the means for adjusting is arranged to allow adjustment of the heating member so as not to generate any heat, and/or wherein the means for adjusting is an actuator for adjusting at least one of:
a contact force between the heating member and the component;
the orientation of the heating member and/or the angle between the heating member and the component;
the magnitude of relative motion between the heating member and the component; and
a distance between the heating member and the component.

3. A heating assembly according to claim 1 or 2, wherein the means for adjusting comprises means for urging the heating member towards the component, preferably wherein the means for urging is a spring, and/or
wherein the means for adjusting is adapted to force the heating member in a direction substantially parallel to an axis of rotation of a tool drive shaft of the kitchen appliance, or in a direction substantially perpendicular to an axis of rotation of a tool drive shaft of the kitchen appliance.

4. A heating assembly according to any preceding claim, further comprising a temperature sensor, preferably in the form of a bimetallic strip or a thermistor, and/or comprising a thermostat for controlling the means for adjusting the heating member, and/or further comprising a user input for receiving a desired temperature to be generated by the heating member.

5. A heating assembly according to any preceding claim, wherein the component is part of, or coupled to, a drive mechanism of the kitchen appliance, and/or wherein the component extends away from an axis of rotation of a drive shaft of the kitchen appliance, and preferably extends substantially perpendicularly to the axis of rotation, and/or wherein the component is a disc, and preferably wherein the heating member is arranged to face a major surface of the disc when generating heat.

6. A heating assembly according to any preceding claim, further comprising means for fixing the heating member to a moving part of the kitchen appliance, or wherein the heating member is static when generating heat.

7. A heating assembly for a kitchen appliance for food, comprising:
a heating member for generating heat by means of relative motion;
means for fixing the heating member to a moving part of the kitchen appliance; and
a formation for arranging the heating member adjacent a component of the kitchen appliance with which there is relative motion so as to generate heat.

8. A heating assembly according to Claim7, further comprising means for adjusting the heating member so as to adjust the heat generated.

9. A heating assembly according to any preceding claim, wherein the heating member is a passive heating member, and preferably only a passive heating member, and optionally comprising at least two heating members.

10. A heating assembly according to any preceding claim, wherein the heating member is adapted to generate heat when in contact with the component, preferably by means of friction, and/or wherein the heating member is adapted to generate heat when separated from the component, preferably by means of electromagnetism, and more preferably by means of electromagnetic induction.

11. A heating assembly according to any preceding claim, wherein the heating member conforms with the shape of the component, and preferably
wherein the heating member is flat or curved, and/or wherein the heating member is also a brake for a tool drive shaft of the kitchen appliance.

12. A heating assembly according to any preceding claim, further comprising thermal insulation, the thermal insulation preferably being arranged to insulate a motor, electronics, and/or an external surface of the kitchen appliance, and preferably further comprising means for cooling, preferably in the form of a thermal conductor or means for active cooling, preferably
wherein the means for cooling is arranged to convey heat away from a heating member, motor, electronics and/or an external surface of the kitchen appliance, and/or wherein the means for cooling is arranged to convey heat towards food contained within the kitchen appliance, and/or
wherein the means for cooling is a thermal conductor, and wherein said thermal conductor comprises a tool drive shaft of the kitchen appliance.

13. A heating assembly according to any preceding claim, wherein the component is an internal surface of the kitchen appliance, preferably the component is substantially shaped as an annulus.

14. An attachment for a kitchen appliance for food comprising a heating assembly according to any preceding claim, preferably wherein said attachment comprises a drivable tool for the kitchen appliance, optionally wherein said attachment comprises means for picking up drive from the kitchen appliance, and/or wherein said attachment comprises a container for processing food, and/or comprising means for coupling the attachment to a container for processing food, preferably wherein the means for coupling is a clip.

15. A kitchen appliance for food comprising an attachment according to claim 14, or comprising a heating assembly according to any of Claims 1 to 13.
